Europäisches Patentamt

European Patent Office

Office européen des brevets

(11) Publication number : **0 531 130 A2**

(12) **EUROPEAN PATENT APPLICATION**

(21) Application number : 92307994.1

(22) Date of filing : 03.09.92

(51) Int. Cl.⁵ : **C04B 35/04**

(30) Priority : **04.09.91 US 754578**

(43) Date of publication of application :
**10.03.93 Bulletin 93/10**

(84) Designated Contracting States :
**BE DE FR GB IT**

(71) Applicant : **DRESSER INDUSTRIES INC.**
**1600 Pacific Avenue**
**Dallas TX 75221 (US)**

(72) Inventor : **Knauss, Richard J.**
**139 Woodland Drive**
**Pittsburgh, Pennsylvania 15236 (US)**

(74) Representative : **Allam, Peter Clerk**
**LLOYD WISE, TREGEAR & CO. Norman House**
**105-109 Strand**
**London WC2R 0AE (GB)**

(54) **Improved magnesite-spinel refractory product and method for making same.**

(57)    A magnesite-spinel refractory product and a method for making the refractory product is disclosed. The product includes from about 60 to 93 wt.% coarse deadburned magnesite, 5 to 30 wt.% preformed coarse spinel, or a sufficient amount of an alumina material to form in situ about 5 to about 30 wt.% of coarse spinel, and from about 2 to about 10 wt.% of a fine calcined alumina. The refractory product is pressed to form a shape and fired at temperatures suitable to form a refractory.

EP 0 531 130 A2

This invention relates generally to magnesite-spinel refractories and more specifically to a magnesite-spinel refractory with improved hot strength, and a method for its manufacture.

Magnesite-spinel refractories generally are made by mixing magnesite and spinel, pressing the mix into a desired form, such as a brick, and firing the pressed mixture. Magnesite-spinel refractories are typically used in cement rotary kilns as an environmentally acceptable substitute for magnesite-chrome refractories from which hexavalent chromium can leach. However, magnesite-spinel refractories generally exhibit relatively low hot strength at temperatures of 2300°F and higher. The most desirable refractories for use in most cement rotary kilns must, however, tolerate such temperatures without cracking or spalling. Thus, although magnesite-spinel refractories are environmentally desirable, their generally low hot strength is a disadvantage when employed in rotary kilns.

Efforts have been made to improve the hot strength of magnesite-spinel refractories. U.S. Patent No. 5,021,374, which is incorporated herein by reference, describes the production of a spall resistant magnesite-spinel refractory wherein the lime and silica content is maintained between 2 to 4% and the lime-to-silica ratio is maintained between 1 to 2.1. Such brick burned at 3150°F have reported strength values of about 800 psig at 2300°F. However, the brick compositions showed some sticking after burning. In commercial environments, sticking is unacceptable where the brick are stacked to achieve maximum kiln loading. To prevent sticking, the brick is burned at a lower temperature. This, however, has the effect of lowering the desirable hot strength of the refractory.

Accordingly, a magnesite-spinel refractory is desired having improved hot strength, particularly at temperatures of 2300°F and above, without compromising other desirable properties required for service in a rotary kiln.

This invention provides a method for manufacturing a magnesite-spinel refractory having improved hot strength without the use of excessively high firing temperatures. A superior, magnesite-spinel refractory product can be made with improved strength at temperatures of 2300°F and above by combining a coarse deadburned magnesite, a coarse spinel and a fine calcined alumina. Moreover, by controlling the lime-to-silica ratio of the as-fired refractory product, the increased high temperature strengths of the refractories can be tailored. Additionally, by varying the chemical make up of the refractory product in conjunction with the coarse magnesite, the coarse spinel and the fine calcined alumina, refractories with improved hot strength at 2300°F and/or improved hot strength at 2700°F can be efficiently and effectively produced. Moreover, the intermediate modulii of ruptures for temperatures between 2300°F and 2700°F can also be improved.

A magnesite-spinel refractory is made according to one embodiment of the present invention by mixing together about 60 to about 93 wt.% coarse deadburned magnesite, about 5 to about 30 wt.% preformed coarse spinel, about 1 to about 15 wt.% fine calcined alumina, and about 2 to about 6 wt.% binder plus processing aid. Alternatively, the coarse spinel can be formed in situ by adding a sufficient amount of an alumina material adapted to form about 5 to about 30 wt.% coarse spinel. Once mixed, the mixture is pressed into a desired shape and then fired at a sufficient temperature and for a sufficient time to form a usable refractory. Preferably, a binder and a processing aid are chosen which will burn out during firing.

The as-fired magnesite-spinel refractory products made according to the present invention comprise from about 60 to about 93 wt.% coarse deadburned magnesite, from about 5 to about 30 wt.% coarse spinel and from about 1 to about 15 wt.% of a fine calcined alumina. In addition, the magnesite will preferably have a magnesia content of at least 88%, a lime-to-silica ratio of from about 0.15 to about 27.0, and a lime-plus-silica content of less than 4.0 wt.%. Preferably, the lime-to-silica ratio is from about 0.25 to about 3.0. Of course, as indicated, the organic binder and the processing aid preferably burn out of the pre-fired refractory during firing.

The magnesite-spinel of the present invention is in general a combination of coarse deadburned magnesite, a coarse spinel and a fine calcined alumina. More particularly, the refractory is prepared by mixing about 60 to about 93 wt.% coarse deadburned magnesite with (1) about 5 to about 30 wt.% of a preformed coarse spinel, (2) about 1 to about 15 wt.% of a fine calcined alumina, (3) from about 2 to about 5 wt.% of an organic binder, and (4) from about 0.25 to 1 wt.% of a processing aid. Alternatively, the coarse spinel can be formed in situ by adding a sufficient amount of a coarse alumina material which will form in situ about 5 to about 30 wt% of coarse spinel.

"Coarse" magnesite, spinel and alumina material refers to materials wherein at least 70% of the materials' particles are greater than 65 mesh. Material below 65 mesh is often referred to as "ball mill fines" ('IBM") and a specific amount of the material below mesh 65 will be less than mesh 325. The term "BM 70" means ball mill fines having seventy percent of the material below mesh 325 and "BM 65" means balls mill fines having sixty five percent of the material below 325 mesh. Accordingly, in the present invention, at least 70% of the magnesite, the spinel and/or the alumina material is comprised of coarse particles having a particle size greater than about 70 mesh. Preferably, at least 60% of the materials are comprised of particles greater than 65 mesh. Materials where at least 50% of the particles are greater than 28 mesh are particularly preferred.

Preferably, the magnesite, spinel, and aluminas particulate materials utilized in the present invention will be selected such that the resulting mixture of such materials will include particle size distributions as follows: approximately 20% to 50% particles of -4 +10 mesh; approximately 20% to 30% particles of -10 +28 mesh; approximately 10% particles of -28 mesh; and approximately 30% of ball mill fines.

The fine calcined alumina is thought to be the dominant factor in controlling increased as-fired hot strength as measured by the modulus of rupture. In particular, the addition of fine calcined alumina will result in improved strength at temperatures of about 2300°F and higher. The fine alumina is thought to increase the amount of ceramic bonding in the magnesite-spinel refractories by providing an auxiliary alumina source for the in situ formation of spinel. The spinel formation caused by the fine calcined alumina is thought to be on a finer scale than the preformed coarse spinel or coarse in situ generated spinel because of the small particle size of the fine calcined alumina, which is less than 325 mesh.

In practicing the invention, the components can be mixed in a single step or the mixing can be performed sequentially. A preferred sequential mixing scheme is as follows: 1) dry mixing a large particle sized portion of the magnesite and a large particle sized portion of the spinel (or a large particle sized portion of the alumina material); 2) wet mixing the dry mixture, the binder and the processing aid; and 3) combining the wet mixture with the fine calcined alumina, a small particle sized portion of the magnesite and a small particle sized portion of the spinel (or a small particle sized portion of the alumina material which in conjunction with the large particle sized portion of the alumina material generates a sufficient amount of the spinel in situ). In general, the large particle sized portion of magnesite and spinel or spinel forming alumina material includes particles greater than 28 mesh and the small particle size portion of the magnesite and spinel or alumina material includes particles of 28 mesh or smaller.

Mixing, whether it is done in a single step or in a sequential mixing scheme, is performed for a sufficient mixing time to insure that the refractory product is adequately mixed. Those skilled in the art should recognize that the mixing time will vary from mixer to mixer and from product to product. Thus, the exact mix time will depend on the particular mixing environment. However, mixing times generally will range from about 1 to about 15 minutes or longer. The sequential mixing scheme should not increase the overall mix time. However, subject to mixer design and to compositional factors mentioned above, the dry mix and wet mix step in the preferred sequential method generally can be performed in about 1 to about 2 minutes with the final mix performed in about 5 minutes to about 8 minutes. Of course, in either method, the mixing is preferably performed in a generally continuous manner. The mixing can be started and stopped without causing property deterioration in the final product.

In addition, the type of mixer used in mixing together the ingredients can affect the mixing method. When high shear mixers are used, such as an Eirich type mixer, then a method involving a single mix step is preferred. However, the sequential mixing scheme is preferred when low shear mixers are used, such as a Lancaster type mixer, to insure adequate and thorough mixing without particle segregation during mixing.

Deadburned magnesites useful in the present invention include, but are not restricted to, Grade 98, Grade 96A and other commercially available deadburned magnesites having a magnesia content of at least 88 wt.%. Of course, for each embodiment where a specific lime-to-silica ratio is desired, then magnesites of the desired chemical composition are employed. In the case of in-situ-formed spinel, the chemical makeup of both the magnesite and the alumina material, i.e. bauxite, added to form in situ spinel can be coordinately adjusted to meet a desired lime-to-silica ratio in the final refractory product. Deadburned magnesite refers to a form of magnesia made from magnesite which has been calcined at high temperatures such that large magnesia crystals are formed.

The addition of an alumina material such as bauxite adapted to generate spinel in situ is a known technique for making magnesite-spinel refractories. For example, in situ generation of spinel is described in U.S. Patent Nos. 2,805,167 and 3,577,247 incorporated herein by reference. The spinel is formed during firing of the mixture. The magnesia and alumina diffuse during firing and react to form spinel. The spinel composition is a one to one mixture of magnesia (MgO) and alumina ($Al_2O_3$), i.e., $MgO \cdot Al_2O_3$. The coarse magnesia-alumina spinel ($MgO \cdot Al_2O_3$) is made in situ from a sufficient amount of an alumina material to result in from about 5 to about 30 wt.% of coarse spinel. The preferred alumina material is fused bauxite, calcined bauxite, a fused alumina, a calcined alumina and the like. In addition, the alumina can be a combination of the various alumina materials. The chemical makeup of the bauxite alumina can be used to vary the lime-to-silica ratio of the final product. Either preformed coarse spinel or in situ formed coarse spinel can be used interchangeably in the method of the present invention.

The fine calcined aluminas useful in the present invention have particle sizes of less than 325 mesh and an alumina content of at least 95 wt.%, with at least 99 wt.% alumina being preferred. An example of a fine calcined alumina suitable for use in the present invention is A-12 alumina from ALCOA Aluminum Company of America.

The organic binders useful in the present invention include, but are not limited to, silicanit (a sulfonated lignin liquor available from Flambeau Paper Corporation, Park Falls, WI, sold as Flamsperse NXP), dextrin, starch, modified starch, polysaccharides, and the like, or a combination thereof or a solution thereof, with silicanit being preferred. When a high shear mixer is used, the organic binder can be in a liquid or solid form. However, when a low shear Lancaster type mixer is used a binder solution is preferred. The organic binder is used to facilitate thorough mixing and to achieve desirable pressing consistency so that the pressed shape will be bound together with sufficient strength to allow handling and kiln firing. The preferred amount of organic binder ranges from about 2 to 5 wt.% based on the entire mix, with from about 3 to about 4 wt.% being particularly preferred.

The processing aid is adapted to act as a lubricant during pressing to allow the mix to flow and to fill voids. The preferred amount of oil ranges from about 0.25 to about 1 wt.%. The processing aids useful in the present invention include, but are not limited to, Staysol Oil (from Standard Oil Company, Cleveland, Ohio, sold as Staysol 77), any commercial motor oil, and the like.

The prepressed mixture is pressed into desired shapes such as bricks. The press volume and the desired pre-fired density will control the forming pressure. A sufficient forming pressure is typically from about 10,000 psig to about 20,000 psig to produce a pre-fired shape having a density from about 175 pounds per cubic foot ("pcf") to about 195 pcf. Pressures from about 10,000 psig to about 15,000 psig are preferred. The pressures are designed to produce a high density refractory as is standardly known in the art.

Once formed into a desired shape, the pressed mixture is fired at a sufficient temperature and for a sufficient time to ,form a usable refractory. Preferably, the binder and processing aid burn out during firing. Useful firing temperatures can range generally from about 2600°F to about 3250°F with from about 2700°F to about 3100°F being preferred. The firing times generally range from about 2 hours to about 20 hours with from about 8 hours to about 12 hours being particularly preferred. The as-fired products comprise from about 60 to about 93 wt.% coarse deadburned magnesite, from about 5 to about 30 wt.% coarse spinel and from about 1 to about 15 wt.% of a fine calcined alumina. The magnesite's magnesia content is at least 88%.

As indicated, the magnesite-spinel refractory products manufactured by the method of the present invention have improved hot strengths, as measured by the modulus of rupture, at 2300°F, 2500°F and 2700°F. The hot strength of these refractories are measured using a 3 point modulus of rupture apparatus made by Tinius Olsen. The testing procedure involves placing a fired refractory product on two support structures of the apparatus, called "points," which are separated by a distance L, the span width. The third point is placed in contact with the opposite surface of the refractory such that the third point is equidistant from the two points upon which the refractory rests. The apparatus is then heated to the appropriate temperature at which time a load is then applied to the third point. The load is increased until the refractory product breaks. The force required to break the refractory is then determined according to the following equation:

$$Modulus = \frac{3PL}{2bd^2}$$

where P is the applied external load, L is the span width, b is the width of the refractory in inches and d is the thickness of the refractory in inches. Cold modulus of rupture (or "room temperature"), is measured according to ASTM method C133-84.

In addition to the overall improvement imparted to the refractories of the present invention by the addition of fine calcined alumina, the final chemical make up of the refractories allows tailoring of the hot strengths of the refractories. The lime-to-silica ratio ($CaO:SiO_2$) of the as fired refractory dominates the ability to fine tune the refractories' hot strength. Another factor is the lime-plus-silica content which is the weight percent of lime (CaO) and silica (SiO2) present in the as-fired refractory. The preferred lime-to-silica ratio ranges from about 0.25 to about 3.0 and the lime-plus-silica content can range from about 1.0 wt.% to about 3.0 wt.%. Further, lime-plus-silica contents greater than 3.0 wt.% can lead to inferior refractories due to sticking during firing. The sticking is thought to be the result of melting of a relatively low temperature calcium-magnesia-silicate mineral phase.

By varying the lime-to-silica ratio of the as-fired refractory from about 0.25 to about 3.0, one can selectively change the hot strengths at 2300°F, 2500°F and 2700°F relative to each other. (All strengths relate to the modulus of rupture of the as-fired refractory at each temperature.) When the lime-to-silica ratio is relatively high, from about 1.5 to about 3.0, the refractories have correspondingly high strengths at temperatures of 2300°F and above. Generally an upper temperature for the refractories is considered to be temperatures of about 2700°F. When the lime-to-silica ratio is relatively low, from about 0.25 to about 1.0, the refractories of the present invention have been found to have improved hot strength at temperatures above 2300°F, especially at 2500°F and 2700°F. The relatively low lime-to-silica refractories of the present invention show 2300°F modulus of rupture ("MOR") values which tend to be lower than the corresponding 2300°F MOR values for the refractories having the relatively high lime-to-silica ratio. Although the 2300°F MOR values are still comparable to the refractory without the calcined alumina-free addition, the 2700°F MOR values tend to be much higher for the low-lime-to-silica ratio refractories as compared to refractories with no fine calcined alumina. This indicates that the as-fired product will have a higher ultimate refractoriness.

The explanation of how the lime-to-silica ratio affects the MOR values at 2300°F and above is not completely understood. However, one theory is that the lower 2300°F MOR values but higher 2700°F MOR values observed for refractories of the present invention with low lime-to-silica ratios result from a decrease in a calcium-magnesia-silicate bonding phase. Calcium-magnesia-silicates are know to act as bonding phases in magnesite-spinel refractories. However, calcium-magnesia-silicates are known to form numerous different mineral phases at temperature between 2300°F and 2700°F. At 2300°F, much of the calcium-silicate mineral phases are solid and contribute to bonding. Thus, relatively high lime-to-silica ratios and relatively high lime-plus-silica contents are thought to actually be beneficial since higher levels of silicate bonding is consistent with improved 2300°F MOR values. However, at temperatures above 2300°F, some of the calcium-magnesia-silicate mineral phases begin to liquefy. The liquified phases are thought to weaken the refractory by allowing cracks to propagate more easily through the refractory. Thus, relatively low lime-to-silica ratios are preferred for refractories of the present invention with improved MOR values above 2300°F and, yet, comparable 2300°F MOR values relative to refractories without fine calcined alumina.

The lime-to-silica ratio of the invention's refractory products can be achieved by varying the composition of the deadburned magnesite and/or by varying the composition of the bauxite alumina used to form coarse spinel in situ. -Other procedures for varying the lime-to-silica ratio of the refractories of the present invention can be used, such as adding lime and/or silica to the mix in desired proportions. Of course, when relatively low lime-to-silica ratios, and low lime-plus-silica contents, are desired in the refractory, a purer magnesite is preferred, generally having a magnesia content of at least 95%. When a relatively high purity magnesite is used such that the lime-to-silica content is low, liquefication of calcium-magnesia-silicate during high temperature firing does not cause sticking of the refractory. Higher firing temperatures are desirable because at firing temperatures above 3000°F more bonding can be formed between phases.

The present invention can be further understood and additional aspects can be discerned from the following illustrative and representative examples. The term batch size used in the following examples refers to the number of pounds of the entire mixture added to the mixer.

Example 1

A refractory prepared from a mixture of ingredients described for the present invention (Mix 1) was compared to a refractory product prepared from a mixture employed in preparing a prior art commercial refractory known as Metalkase Magnel S (Mix 2) Metalkase Magnel S is available from Harbison-Walker Refractories, a Division of Dresser Industries, Inc., Pittsburgh, PA. The commercial refractory composition is similar to that described in U.S. Patent No. 5,021,374. Table I provides the compositions of Mix 1 and Mix 2.

## Table I

|  | wt. % | |
| Component/Measurement | Mix 1 | Mix 2 |
| Magnesite (96A Grade) | | |
| −4 +10 mesh | 18 | 12 |
| −10 +28 mesh | 26 | 26 |
| −28 mesh | 11 | 10 |
| BM 65 mesh | 25 | 27 |
| Total | 80 | 75 |
| Spinel, −6 mesh | 15 | 25 |
| Alumina | 5 | 0 |
| Silicanit | 3.8 | 3.8 |
| Staysol Oil | 0.5 | 0.5 |

Mix 1 and Mix 2 were mixed to 2000 lbs batch sizes. Thus, the number of pounds of each component used is determined by multiplying the wt.% by 2000 lbs. Mix 2 used 75 wt.% magnesite and 25 wt.% spinel. Mix 1 used 80 wt.% magnesite, 15 wt.% spinel, and 5 wt.% of a fine calcined alumina. The spinel content of Mix 2 was increased compared to Mix 1 so that both mixes would have the same approximate alumina content. Thus, Mix 1 was designed to differ from Mix 2 only by the addition of 5 wt.% of the fine calcined alumina. The term BM 65 means that the particles are less than 65 mesh and 65% of the particles are less than -325 mesh.

For purposes of this example, the term "+28 mesh" means particles of greater than 28 mesh. The term "-28 mesh" means particles of 28 mesh or less. Both Mix 1 and Mix 2 were mixed as follows: 1) the +28 mesh magnesite and +28 mesh spinel were added to the mixer and were mixed for 2 minutes to form a dry mixture; 2) to the dry mixture was added the silicanit and the Staysol oil to produce a wet mixture which was mixed for an additional 1 minute; and 3) to the wet mixture was added the fine calcined alumina, the -28 mesh magnesite and the -28 mesh spinel to produce a prepressed mixture which was mixed for an additional 5 minutes for an overall mix time of 8 minutes. In Mix 1, the fine calcined alumina was also added to the wet mixture with the -28 mesh magnesite and the -28 mesh spinel. The prepressed mixture was added to a press and the mixture was pressed in a pressing volume at 12,000 psig to form a pre-fired shape. The pre-fired shape was fired at 2800°F for 10 hours.

Table II lists the properties of the refractory products after they were fired.

## Table II

| Property | Mix 1 | Mix 2 |
|---|---|---|
| Bulk Density, pcf | 184 | 181 |
| Apparent Porosity, % | 17.1 | 18.0 |
| Modulus of Rupture, psig | | |
| At Room Temperature | 660 | 490 |
| At 2300°F | 1100 | 830 |

A 33% improvement in hot strength at 2300°F was realized as shown in Table II in comparing the modulus of rupture of Mix 1 (1100 psig) and Mix 2 (830 psig). Hot strength is recognized to have an important influence on prolonging service life of magnesite-spinel refractories in rotary kilns. Mix 1 also showed an increase in room temperature strength as measured by the room temperature modulus of rupture. Thus, the inclusion of five parts of a fine calcined alumina can be seen to produce a superior overall refractory for use as a rotary kiln lining.

### Example 2

This example illustrates a series of four mixes (Mixes 3-6) with varying amounts of magnesite, coarse, preformed, fused spinel and a fine calcined alumina. Mix 3 was made for comparative purposes and represents a refractory absent the fine calcined alumina. All the mixes were preformed under nearly identical conditions as set forth below. The batch size was 72 pounds for all four mixes.

The ingredients shown in Table III were added to a Lancaster type mixer in poundages, corresponding to their wt.% (Table II) multiplied by the batch size. In the first step, the magnesite and spinel having particle sizes above 28 mesh were mixed for 2 minutes to form a dry mixture. To the dry mixture was added the silicanit and the Staysol oil to produce a wet mixture which was mixed for an additional 1 minute. Next, the fine calcined alumina (except in Mix 3) and the particles of magnesite and spinel having particle sizes of 28 mesh or below, were added to the wet mixture and the resulting prepressed mixture was thoroughly mixed for an additional 5 minutes for an overall mix time of 8 minutes. The mixture was added to a press and the mixture was pressed at 12, 000 psig to form a pre-fired shape. The pre-fired shape was then fired at 2800°F for 10 hours.

Table III lists the wt.% of the ingredients that were mixed to form Mixes 3-6 along with the properties of the refractory products after they were fired. Table III lists the chemical analysis of the brick that were formed after firing mixes 3-6. The magnesia content was determined by differences based on the analysis of the other components.

## Table III

| Component/Measurement | Wt. %/Property | | | |
|---|---|---|---|---|
| | Mix 3 | Mix 4 | Mix 5 | Mix 6 |
| Magnesite (96A Grade) | | | | |
| -4 +10 mesh | 11 | 13 | 15 | 16 |
| -10 +28 mesh | 13 | 15 | 17 | 19 |
| -28 mesh | 7 | 10 | 11 | 14 |
| BM 70 | 29 | 24 | 21 | 16 |
| Total | 60 | 62 | 64 | 65 |
| Spinel | | | | |
| -6 +10 mesh | 16 | 14 | 12 | 10 |
| -10 +28 mesh | 14 | 12 | 10 | 9 |
| -28 mesh | 10 | 9 | 8 | 6 |
| Total | 40 | 35 | 30 | 25 |
| Alumina | 0 | 3 | 6 | 10 |
| Silicanit | 3.8 | 3.8 | 3.8 | 3.8 |
| Staysol Oil | 0.5 | 0.5 | 0.5 | 0.5 |
| Pressed Density[a] | 190 | 191 | 191 | 190 |
| Linear Change on Burning[b] | +0.1 | +0.3 | +0.3 | +0.2 |
| Fired Bulk Denisty[a] | 182 | 182 | 183 | 182 |
| Apparent Porosity[c] | 17.6 | 17.6 | 17.1 | 17.4 |
| Apparent Specific Gravity | 3.55 | 3.54 | 3.54 | 3.54 |
| Modulus of Rupture[d] | | | | |
| Room Temperature | 870 | 810 | 760 | 850 |
| 2300°F | 1010 | 1290 | 1290 | 1430 |
| 2700°F | 10 | 30 | 50 | 60 |
| Modulus of Elasticity[e] | 2.3 | 1.9 | 1.9 | 2.2 |

[a] Measured values expressed in pound per cubic foot (pcf).
[b] Measured values expressed as a percentage.
[c] Measured values expressed as a percentage based on an average of three measurements.
[d] Measured values expressed in psig based on an average of three measurements.
[e] Measured values expressed in psig X 106 based on an average of three measurements.

## Table IV

## Chemical Analysis After Firing

| Component | Mix 3 | Mix 4 | Mix 5 | Mix 6 |
|---|---|---|---|---|
| Silica ($SiO_2$) | 0.91 | 0.86 | 0.74 | 0.74 |
| Alumina ($Al_2O_3$) | 23.9 | 24.1 | 24.9 | 26.1 |
| Titania ($TiO_2$) | 1.08 | 0.98 | 0.85 | 0.70 |
| Iron Oxide ($Fe_2O_3$) | 1.12 | 0.96 | 0.85 | 0.73 |
| Chromic Oxide ($Cr_2O_3$) | 0.28 | 0.23 | 0.19 | 0.15 |
| Lime (CaO) | 1.58 | 1.61 | 1.61 | 1.62 |
| Boron Oxide ($B_2O_3$) | 0.025 | 0.026 | 0.026 | 0.024 |
| Total Analyzed | 28.89% | 28.77% | 29.22% | 30.06% |
| By Difference Magnesia (MgO) | 77.11 | 71.23 | 70.78 | 69.94 |
| Total | 100.00% | 100.00% | 100.00% | 100.00% |
| Lime-to-Silica Ratio | 1.74 | 1.87 | 2.04 | 2.19 |
| Lime-plus-Silica Content | 2.49 | 2.47 | 2.40 | 2.36 |

It is apparent from the data in Table III that increasing amounts of fine alumina resulted in increased hot strengths at both 2300°F and 2700°F as compared to the refractory corresponding to Mix 3. The 2700°F modulus of rupture is about 6 times that of the refractory of Mix 3 which had no added fine calcined alumina, while the 2300°F modulus of rupture increased by more than 40%. The comparison to Mix 3 is not exact or , direct because the ingredient ratios of more the one thing are different. However, Mix 3 does represent a refractory with similar make-ups relative to Mix 4-6 and is used here to indicate the properties of a refractory having no fine calcined alumina.

The analyses reported in Table IV show that the lime-to-silica ratios of Mixes 4-6 were between about 1.70 and about 2.25 and the lime-plus-silica contents were between about 2.0 and about 3.0. Thus, the use of 96A grade magnesite and fine alumina imparts significant improvements in both 2300°F and 2700°F hot strength as measured by the modulus of rupture at those temperatures.

Example 3

This example illustrates two mixes (Mixes 7-8) with a break down of the particle size distribution of the deadburned magnesite used to form refractory products. The example also illustrates the use of a bauxite (bauxite #1) as an alumina material for the in situ formation of coarse spinel. Mix 7 is a mix included for comparison purposes only and contains no fine calcined alumina. All the mixes were preformed according to the following method. The batch size for both mixes was 70 pounds.

The ingredients shown in Table V were added to the mixer in the poundages, corresponding to their wt.% (Table III) multiplied by the batch size. In the first step, the magnesite and spinel having particle sizes above 28 mesh were mixed to the mixer and were mixed for 2 minutes to form a dry mixture. To the dry mixture was added the silicanit and the Staysol oil to produce a wet mixture which was mixed for an additional 1 minute. Next the fine calcined alumina (in mix 8 only) and the particles of magnesite and spinel having particle sizes of 28 mesh or below were added to the wet mixture and the resulting prepressed mixture was mixed for an additional 5 minutes for an overall mix time of 8 minutes. The mixture was pressed at 12,000 psig to form a pre-fired shape. The pre-fired shape was then fired at 2800°F for 10 hours.

Table V lists the wt.% of the ingredients that were mixed to form Mix 7 and Mix 8 along with the properties of the refractory products after they were fired. Table VI lists the chemical analysis of bauxite #1 that was used in Mix 8.

Table V

| Component/Measurement | Wt. % / Property | |
| | Mix 7 | Mix 8 |
| --- | --- | --- |
| Magnesite (96A Grade) | | |
| −4 +10 mesh | 30 | 30 |
| -10 +28 mesh | 23 | 23 |
| -28 mesh | 9 | 9 |
| BM 70 | 28 | 23 |
| Total | 90 | 85 |
| Bauxite #1, -10 mesh | 10 | 10 |
| Alumina, -325 mesh | 0 | 5 |
| Silicanit | 3.8 | 4.0 |
| Staysol Oil | 0.5 | 0.5 |
| Pressed Density[a] | 179 | 181 |
| Sticking During Burn | None | None |
| Linear Change in Burning[b] | -0.7 | -0.7 |
| Bulk Density[a] | 176 | 179 |
| Apparent Porosity[c] | 20.3 | 18.9 |
| Apparent Specific Gravity | 3.53 | 3.54 |
| Modulus of Rupture[d] | | |
| At Room Temperature | 880 | 1040 |
| At 2300°F | 900 | 1210 |
| At 2500°F | 50 | 140 |
| Modulus of Elasticity[e] | 2.2 | 2.5 |

[a] Measured values expressed in pound per cubic foot (pcf).
[b] Measured values expressed as a percentage.
[c] Measured values expressed as a percentage based on an average
of three measurements.
[d] Measured values expressed in psig based on an average of three measurements.
[e] Measured values expressed in psig X $10^6$ based on an average of
three measurements.

Table VI

| Chemical Analysis of Bauxite #1 | |
| --- | --- |
| Component | Percentage |
| Silica ($SiO_2$) | 1.07 |
| Alumina ($Al_2O_3$) | 88.6 |
| Titania ($TiO_2$) | 4.95 |
| Iron Oxide ($Fe_2O_3$) | 4.91 |
| Lime (CaO) | 0.02 |
| Magnesia (MgO) | 0.03 |
| Soda ($Na_2O$) | 0.02 |
| Potash ($K_2O$) | 0.01 |

Table V shows that the addition of fine calcined alumina to a refractory product of the present invention in which the coarse spinel was formed in situ also resulted in increases in strength at 2300°F and at 2500°F. The other properties of the refractory were virtually unchanged relative to the comparative example (Mix 7) which contained no fine calcined alumina. About 60% of the magnesite had a particle size greater than 28 mesh and that about 70% of the magnesite had a particle size greater than about 65 mesh.

Example 4

This example illustrates a series of four mixes (Mixes 9-12) with varying amounts of a high purity magnesite, coarse, preformed, fused spinel and a fined calcined alumina. Mix 9 was made for comparative purposes and represents a refractory absent the fine calcined alumina. All the mixes were preformed according to the following mix sequence. The batch size was 200 pounds for all four mixes.

The ingredient shown in Table VI were added to the mixer in the poundages corresponding to their wt.% (Table III) multiplied by the batch size. In the first step, the magnesite and spinel having particle sizes above 28 mesh were mixed for 2 minutes to form a dry mixture. To the dry mixture was added the silicanit and the Staysol oil to produce a wet mixture which was mixed for an additional 1 minute. Next the fine calcined alumina (except in mix 9) and the particles of magnesite and spinel having particle sizes of 28 mesh or below were added to the wet mixture and the resulting prepressed mixture was mixed for an additional 5 minutes for an overall mix time of 8 minutes. The mixture was added to a press and pressed at 12,000 psig to form a pre-fired shape. The pre-fired shape was then fired at 3050°F for 10 hours.

Table VII lists the wt.% of the ingredients that were mixed to from Mixes 9-12 along with the properties of the refractory products after they were fired. Table VIII lists the chemical analysis of the refractory products of Mixes 9-12 with the magnesia content determined by differences based on the analysis of the other components.

Table VII

| Component/Measurement | Mix 9 | Mix 10 | Mix 11 | Mix 12 |
|---|---|---|---|---|
| Magnesite (98 Grade) | | | | |
| -4 +10 mesh | 14 | 16 | 16 | 19 |
| -10 +28 mesh | 13 | 17 | 20 | 21 |
| -28 mesh | 3 | 2 | 3 | 5 |
| BM 70 | 30 | 27 | 24 | 20 |
| Total | 60 | 62 | 64 | 65 |
| Fused spinel | | | | |
| -6 +10 mesh | 16 | 14 | 12 | 10 |
| -10 +28 mesh | 14 | 12 | 10 | 9 |
| -28 mesh | 10 | 9 | 8 | 6 |
| Total | 40 | 35 | 30 | 25 |
| Alumina, -325 mesh | — | 3 | 6 | 10 |
| Silicanit | 3.8 | 3.80 | 3.8 | 3.8 |
| Staysol Oil | 0.5 | 0.5 | 0.5 | 0.5 |
| Pressed Density[a] | 188 | 180 | 181 | 182 |
| Linear Change in Burning[b] | +0.1 | 0.0 | -0.2 | -0.2 |
| Bulk Density[a] | 181 | 180 | 181 | 182 |
| Apparent Porosity[c] | 17.8 | 17.9 | 17.3 | 16.7 |
| Apparent Specific Gravity | 3.53 | 3.51 | 3.52 | 3.51 |
| Modulus of Rupture[d] | | | | |
| At Room Temperature | 940 | 930 | 940 | 1020 |
| At 2300°F | 750 | 890 | 840 | 700 |
| At 2700°F | 80 | 120 | 100 | 160 |
| Modulus of Elasticity[e] | 2.5 | 2.4 | 2.5 | 2.6 |

[a] Measured values expressed in pound per cubic foot (pcf).
[b] Measured values expressed as a percentage.
[c] Measured values expressed as a percentage based on an average of three measurements.
[d] Measured values expressed in psig based on an average of three measurements.
[e] Measured values expressed in psig X $10^6$ based on an average of three measurements.

Table VIII
Chemical Analysis After Firing

| Component | Mix 9 | Mix 10 | Mix 11 | Mix 12 |
|---|---|---|---|---|
| Silica ($SiO_2$) | 0.92% | 0.86% | 0.84% | 0.79% |
| Alumina ($Al_2O_3$) | 24.5 | 24.9 | 25.0 | 26.1 |
| Titania ($TiO_2$) | 1.00 | 0.99 | 0.86 | 0.72 |
| Iron Oxide ($Fe_2O_3$) | 1.11 | 1.00 | 0.89 | 0.80 |
| Chromic Oxide ($Cr_2O_3$) | 0.25 | 0.21 | 0.19 | 0.14 |
| Lime (CaO) | 0.74 | 0.73 | 0.75 | 0.75 |
| Boron Oxide ($B_2O_3$) | 0.055 | 0.051 | 0.044 | 0.054 |
| Total Analyzed | 28.67% | 28.74% | 28.57% | 29.35% |
| By Difference | | | | |
| Magnesia (MgO) | 71.32 | 71.26 | 71.43 | 70.65 |
| Total | 100.00% | 100.00% | 100.00% | 100.00% |
| | | | | |
| Lime-to-Silica Ratio | 0.80 | 0.85 | 0.89 | 0.95 |
| Lime-plus-Silica Content | 1.66 | 1.59 | 1.59 | 1.54 |

Table VII shows that the use of a high purity magnesite having a low lime-to-silica ratio and a low lime-plus-silica content in conjunction with the addition of a fine calcined alumina resulted in refractories with improved strengths at 2700°F as measured by the modulus of rupture at that temperature. The modulus of rupture at 2300°F was not significantly changed from the modulus of rupture of Mix 9 which had no fine calcined alumina. Again, the use of Mix 9 as a comparative standard is not exact or direct because more than one variable is being changed. However, Mix 9 does give the properties of a refractory without the fine calcined alumina having a similar compositional make up. The other refractory properties, relative to Mix 9, can be seen to be largely unaffected.

The data listed in Table VIII show that a decrease in the lime-plus-silica content and a relatively low lime-to-silica ratio of the final refractory does not result in significantly changed 2300°F strength behavior, but does result in significant improvements in strength at 2700°F. This behavior, as previously discussed, is thought to be due to a decrease in the amount of calcium-magnesia-silicate which behaves as a bonding phase at temperatures below about 2500°F. Thus, the 2300°F strength can be improved by the presence of a calcium-magnesia-silicate phase. However, at temperatures above 2300°F, some of the calcium-magnesia-silicate is thought to liquefy which can cause a decrease in the retention of strength of the refractory products above 2300°F. As the temperature is increased above 2300°F, magnesite-spinel refractories generally show a marked decrease in strength. The addition of fine calcined alumina and the complex composite morphology of the refractories of the present invention is thought to slow the decrease in the loss of strength at temperature above 2300°F which is manifested as improved strengths at temperatures above 2300°F.

Example 5

This example illustrates two mixes (Mixes 13-14) using a high purity magnesite (98 Grade) and a bauxite (bauxite #2) as an alumina material for the in situ formation of coarse spinel. Mix 13 was made for comparative purposes and represents a refractory absent the fine calcined alumina. All the mixes were preformed according to the mix sequence shown below. The batch size was 2000 pounds for both mixes.

The ingredient shown in Table IX were added to the mixer in the poundages corresponding to their wt.% shown in Table II multiplied by the batch size. In the first step, the magnesite and spinel having particle sizes above 28 mesh were mixed for 2 minutes to form a dry mixture. To the dry mixture was added the silicanit and the Staysol oil to produce a wet mixture which was mixed for an additional 1 minute. Next the fine calcined alumina (in mix 14 only) and the particles of magnesite and spinel having particle sizes of 28 mesh or below were added to the wet mixture and the resulting prepressed mixture was mixed for an additional 5 minutes for an overall mix time of 8 minutes. The mixture was pressed at 12,000 psig to form a pre-fired shape. The pre-fired shape was then fired at 2800°F for 10 hours.

Table IX lists the wt.% of the ingredients that were mixed to form Mixes 13-14 along with the properties of the refractory products after they were fired. Table X lists the chemical analysis of the brick that were formed after firing Mixes 13-14. The magnesia content was determined by differences based on the analysis of the other components. Table XI lists the chemical analysis of bauxite #2 that was used in Mix 14.

11

Table IX

| Component/Measurement | Mix 13 | Mix 14 |
|---|---|---|
| Magnesite (98 Grade), | | |
| -4 +10 mesh | 30 | 30 |
| -10 +28 mesh | 22 | 23 |
| -28 mesh | 4 | 7 |
| BM 70 | 26 | 22 |
| Total | 82 | 82 |
| Bauxite #2, | | |
| -10 +28 mesh | 6 | 7 |
| -28 mesh | 4 | 4 |
| -65 mesh | 4 | 2 |
| Total | 18 | 13 |
| Alumina, -325 mesh | 0 | 5 |
| Silicanit | 3.8 | 3.8 |
| Staysol Oil | 0.5 | 0.5 |
| Pressed Density[a] | 185 | 186 |
| Linear Change in Burning[b] | +1.2 | +0.3 |
| Bulk Density[a] | 173 | 178 |
| Apparent Porosity[c] | 21.1 | 19.0 |
| Apparent Specific Gravity | 3.51 | 3.51 |
| Modulus of Rupture[d] | | |
| At Room Temperature | 780 | 1040 |
| At 2300°F | 420 | 490 |
| At 2500°F | 130 | 330 |
| Modulus of Elasticity[e] | 2.4 | 3.1 |

[a] Measured values expressed in pound per cubic foot (pcf).

[b] Measured values expressed as a percentage.

[c] Measured values expressed as a percentage based on an average of three measurements.

[d] Measured values expressed in psig based on an average of three measurements.

[e] Measured values expressed in psig X $10^6$ based on an average of three measurements.

Table X
Chemical Analysis After Firing

| Component | Mix 13 | Mix 14 |
|---|---|---|
| Silica ($SiO_2$) | 1.78 | 1.39% |
| Alumina ($Al_2O_3$) | 16.6 | 16.6 |
| Titania ($TiO_2$) | 0.65 | 0.46 |
| Iron Oxide ($Fe_2O_3$) | 0.39 | 0.35 |
| Chromic Oxide ($Cr_2O_3$) | 0.03 | 0.03 |
| Lime (CaO) | 0.86 | 0.85 |
| Boron Oxide ($B_2O_3$) | 0.054 | 0.057 |
| Total Analyzed | 20.36% | 20.25% |
| By Difference | | |
| Magnesia (MgO) | 79.64 | 79.75 |
| Total | 100.00% | 100.00% |
| Lime-to-Silica Ratio | 0.48 | 0.61 |
| Lime-plus-Silica Content | 2.64 | 2.24 |

Table XI

| Chemical Analysis of Bauxite #2 | |
| --- | --- |
| Component | Percentage |
| Silica ($SiO_2$) | 5.7 |
| Alumina ($Al_2O_3$) | 88.6 |
| Titania ($TiO_2$) | 3.10 |
| Iron Oxide ($Fe_2O_3$) | 1.16 |
| Lime (CaO) | 0.02 |
| Magnesia (MgO) | 0.02 |
| Soda ($Na_2O$) | 0.05 |
| Potash ($K_2O$) | 0.05 |

Table IX shows that the use of a high purity magnesite with the formation in situ of coarse spinel in conjunction with the addition of the fine calcined alumina gave rise to a refractory product, Mix 14, with improved 2500°F strength as compared to Mix 13. The data in Table X shows that the low lime-to-silica ratio was the dominant factor in controlling hot strength because the lime-plus-silica content is in the same range as found in Example 2. The fact that the lime-plus-silica content does not seem to adversely affect the 2500°F strength is thought to be due to the fact that a relative low lime-to-silica ratio gives rise to a particle mineral phase of calcium-magnesia-silicate is Table IX shows that the use of a high purity magnesite with the formation in situ of coarse spinel in conjunction with the addition of the fine calcined alumina gave rise to a refractory product, Mix 14, with improved 2500°F strength as compared to Mix 13. The data in Table X shows that the low lime-to-silica ratio was the dominant factor in controlling hot strength because the lime-plus-silica content is in the same range as found in Example 2. The fact that the lime-plus-silica content does not seem to adversely affect the 2500°F strength is thought to be due to the fact that a relative low lime-to-silica ratio gives rise to a particle mineral phase of calcium-magnesia-silicate is thought to remain unliquefied and therefore provides bonding at 2500°F.

The examples illustrate that the combination of coarse deadburned magnesite, coarse spinel, whether preformed or formed in-situ, and fine calcined alumina results in the manufacture of superior magnesite-spinel refractories having improved hot strength. The hot strength of the refractories of the present invention can be tuned to some extent by the careful control of the lime-to-silica ratio of the final refractory and to a lesser extent by the control of the lime-to-silica content of the final refractory.

While the invention has been described in connection with a preferred embodiment, the scope of the covers such alternatives, modifications, and equivalents as may be included within the spirit and scope of the invention as defined by the appended claims.

## Claims

1. A method of making a refractory, comprising:
   (a) forming a mixture comprising the following components:
   (1) about 60 to about 93 wt.% coarse deadburned magnesite particles having a magnesia content of at least 88 wt.%;
   (2) a coarse spinel constituent selected from (i) about 5 to about 30 wt.% coarse spinel particles and (ii) a sufficient amount of particles of an in situ coarse-spinel forming alumina material;
   (3) about 1 to about 15 wt.% fine calcined alumina particles having an alumina content of at least 95 wt.%;
   (4) about 2 to about 5 wt.% of an organic binder; and
   (5) about 0.25 to 1 wt.% of a processing aid;
   (b) pressing together said mixture to form a shape for firing having a density of about 175 to about 195 pounds per cubic foot; and
   (c) firing said shape for a time and at a temperature sufficient to form a refractory.

2. The method of claim 2 wherein said coarse-spinel forming alumina material is selected from the group consisting of a coarse fused bauxite, a coarse calcined bauxite, a coarse fused alumina, a coarse calcined alumina and combinations thereof.

3. The method of claim 1 wherein the magnesia content of said magnesite is at least 95 wt.%.

4. The method of claim 1 wherein said firing temperature is from about 2650°F to about 3100°F.

5. The method of claim 1 wherein said mixture is pressed together at a pressure from about 10,000 to about 20,000 pounds per square inch.

6. The method of claim 1 wherein at least 60% of the particles comprising said magnesite component in the mixture are greater than 65 mesh.

7. The method of claim 1 wherein at least 60% of the particles comprising the spinel constituent in the mixture are-greater than 65 mesh.

8. The method of claim 1 wherein at least 50% of the particles comprising said magnesite component in the mixture are greater than 28 mesh.

9. The method of claim 1 wherein at least 50% of the particles comprising the spinel constituent in the mixture are greater than 28 mesh.

10. The method of claim 1 wherein said mixture is formed by:
(a) dry mixing the particles of magnesite and spinel or spinel forming alumina material of greater than 28 mesh;
(b) combining the dry mixture, the binder and the processing aid to form a wet mixture; and
(c) combining the wet mixture with the fine calcined alumina particles and the particles of magnesite and spinel or spinel forming alumina material of 28 mesh or smaller.

11. A refractory, comprising the as-fired product of:
(a) a coarse deadburned magnesite having a magnesia content of at least 88 wt.% in an amount ranging from about 60 to about 93 wt.%;
(b) a coarse spinel in an amount ranging from about 5 to about 30 wt.%; and
(c) a fine calcined alumina in an amount ranging from about 1 to about 15 wt.%.

12. The refractory of claim 11 wherein the lime-to-silica ratio is from about 0.15 to about 27.0.

13. The refractory of claim 12 wherein the lime-to-silica ratio is from about 0.25 to about 3.0.

14. The refractory of claim 11 wherein the lime-plus-silica content is less than 4.0 wt.%.